(19) Europäisches Patentamt
European Patent Office
Office européen des brevets

(11) **EP 2 449 235 B1**

(12) **EUROPEAN PATENT SPECIFICATION**

(45) Date of publication and mention
of the grant of the patent:
**11.05.2016 Bulletin 2016/19**

(51) Int Cl.:
*F02D 41/02* (2006.01)   *F01N 3/023* (2006.01)
*F02D 13/04* (2006.01)   *F02D 9/06* (2006.01)

(21) Application number: **10794451.4**

(22) Date of filing: **15.06.2010**

(86) International application number:
**PCT/SE2010/050669**

(87) International publication number:
**WO 2011/002395 (06.01.2011 Gazette 2011/01)**

(54) **APPARATUS AND METHOD FOR REGENERATING A PARTICULATE FILTER IN A MOTOR VEHICLE**

VORRICHTUNG UND VERFAHREN ZUR REGENERIERUNG EINES PARTIKELFILTERS IN EINEM MOTORFAHRZEUG

APPAREIL ET PROCÉDÉ DE RÉGÉNÉRATION D'UN FILTRE À PARTICULES DANS UN VÉHICULE AUTOMOBILE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **01.07.2009 SE 0950511**

(43) Date of publication of application:
**09.05.2012 Bulletin 2012/19**

(73) Proprietor: **Scania CV AB
151 87 Södertälje (SE)**

(72) Inventor: **TELBORN, Klas
S-152 43 Södertälje (SE)**

(74) Representative: **Scania CV AB
Patents, GP 117kv
151 87 Södertälje (SE)**

(56) References cited:
**EP-A1- 2 034 144        US-A1- 2004 044 457
US-A1- 2004 044 457   US-A1- 2004 200 213
US-A1- 2004 200 213   US-A1- 2008 196 388
US-A1- 2008 196 388**

**Description**

TECHNICAL FIELD

The present invention relates to a method for regenerating a particle filter of a motor vehicle. The invention relates also to a computer programme product comprising programme code for a computer for implementing a method according to the invention. The invention relates also to a device for regenerating a particle filter of a motor vehicle and to a motor vehicle equipped with the device.

BACKGROUND

Vehicles today may be equipped with a particle filter to reduce the amount of emissions during their operation. Such a particle filter is a so-called full filter, also known as DPF. The particle filter gathers particles such as soot and has at certain intervals to be cleaned or regenerated. One way of regenerating DPF filters may be by so-called active regeneration.

A way to make it possible to regenerate a particle filter is to add unburned fuel to the exhaust system in order to effect a temperature increase in the exhaust system. This may be done by adding fuel in one or more cylinders of the vehicle's engine in such a way that it does not undergo complete combustion and is thereafter led to the exhaust system. Another way to make it possible to regenerate a particle filter is to use an injector to put unburned fuel directly into the exhaust system.

The added unburned fuel thereafter undergoes combustion in a catalyst, thereby generating heat which makes it possible for soot to be converted to carbon dioxide and water by reacting with oxygen which is present in the exhaust system.

Effective regeneration of the particle filter can only take place at a lowest temperature. A usual ignition temperature of the catalyst is about 250 degrees Celsius. Regenerating the filter also needs to proceed for a certain period of time if desired results are to be achieved. This period is of the order of 20 minutes. If regeneration takes place for a shorter period, the filter will not be completely regenerated. Upon interruption of regeneration of the particle filter, i.e. when the temperature of the catalyst drops sufficiently, resumption of the regeneration process will require a certain amount of fuel to re-establish appropriate temperatures in the exhaust system.

During normal operation of the vehicle, today's techniques for regenerating particle filters work effectively, but in certain vehicle operating situations today's regeneration techniques do not work satisfactorily. One such situation is towing, particularly of heavy vehicles such as trucks and buses. During towing, no fuel is supplied for combustion and operation of the vehicle. During towing, the vehicle may typically roll downhill or roll forward towards a stop signal, e.g. a red traffic light.

EP 1961939 describes a method for regenerating a particle filter at low engine load. The temperature in the exhaust system is raised by supplying fuel in certain cylinders of the vehicle's engine but not adding fuel to certain other cylinders of the engine.

SUMMARY OF THE INVENTION

An object of the present invention is to propose a novel and advantageous method for regenerating a particle filter of a motor vehicle.

Another object of the invention is to propose a method, a device and a computer programme for effecting regeneration of a particle filter of a vehicle during towing.

A further object of the invention is to propose a method, a device and computer programme for achieving improved performance of a motor vehicle.

A further object of the invention is to propose a method, a device and computer programme for achieving a more environmentally friendly method for regenerating a particle filter of a vehicle.

These objects are achieved with a method according to claim 1 for regenerating a motor vehicle's particle filter situated downstream of a catalyst.

An aspect of the invention proposes a method for regenerating a particle filter situated downstream of a catalyst in a motor vehicle. The method comprises the steps of supplying, upstream of the catalyst, fuel for combustion and to raise the temperature of the particle filter, and of maintaining the raised temperature of the particle filter for a desired period of time. During towing, which normally involves no supply of fuel, the method incorporates the steps of ensuring that the temperature of the catalyst exceeds its ignition temperature, by supplying fuel for combustion in the engine to raise the catalyst's temperature, and of compensating for surplus torque due to fuel thus supplied, by generating a torque reduction by using an exhaust brake to increase the exhaust backpressure.

With advantage, an improved method for regenerating a particle filter of the vehicle during towing is made possible whereby there are fewer interruptions of ongoing regeneration of the filter.

A driver will experience no change in running characteristics when regeneration of the particle filter during towing proceeds on the basis of said torque reduction.

The following is a model for describing a crankshaft torque of a vehicle:

$$Mvev = Mind + Mgas + Mfrik + Magg \qquad (1)$$

where

Mvev is torque of a crankshaft of the vehicle;
Mind is the indicated torque of the vehicle, meaning torque generated by a high-pressure portion of the combustion cycle of a cylinder of the engine; Mgas is gas exchange torque of the vehicle, meaning torque generated by a low-pressure portion of the combustion cycle of a cylinder of the engine; Mfrik is friction torque of the vehicle, meaning torque generated by bearings and piston movements of the vehicle; and
Magg is ancillary torque of the vehicle, meaning torque generated by various ancillary units of the vehicle, e.g. an AC compressor or engine fan.

According to an aspect of the invention, the particle filter of the vehicle should be regenerated during towing without the driver perceiving any change in the torque of the crankshaft.

As a suitable temperature of the catalyst and the particle filter according to the invention is achieved by combustion of fuel in the engine, the engine's indicated torque Mind will increase. It is assumed inter alia that the vehicle's friction torque Mfrik is substantially constant during the regeneration method according to this model.

To maintain substantially constant torque Mvev of the vehicle's crankshaft, the increase in the indicated torque Mind is compensated for by a corresponding reduction in the gas exchange torque Mgas and/or the ancillary torque Magg.

Reducing the gas exchange torque Mgas and/or the ancillary torque Magg may be done in various ways. A way to reduce the gas exchange torque Mgas is to use an exhaust brake of the vehicle. A way of reducing the ancillary torque Magg is to use a cooling fan for the vehicle's engine. Another way of reducing the ancillary torque Magg is to use an AC unit.

According to the invention, an increase in indicated torque is compensated for by increasing the amount of the gas exchange torque by using an exhaust brake during active regeneration of a particle filter of a vehicle during towing, whereby gas exchange torque Mgas is braking torque of the vehicle and can therefore neutralise the increase in the indicated torque Mind.

The method is easy to implement in existing motor vehicles. Software for regenerating, during towing, a particle filter of a motor vehicle according to the invention may be installed in a control unit of the vehicle during the manufacture of the vehicle. A purchaser of the vehicle may thus have the possibility of selecting the function of the method as an option. Alternatively, software which comprises programme code for effecting the innovative method for regenerating, during towing, a particle filter of a motor vehicle may be installed in a control unit of the vehicle on the occasion of upgrading at a service station, in which case the software may be loaded into a memory in the control unit. Implementing the innovative method is therefore cost-effective, particularly as no further sensors or the like need be installed in the vehicle according to an aspect of the invention. Relevant hardware is currently already provided in the vehicle. The invention therefore represents a cost-effective solution to the problems indicated above.

Software which comprises programme code for regenerating, during towing, a particle filter of a motor vehicle is easy to update or replace. Various parts of the software comprising programme code for regenerating, during towing, a particle filter of a motor vehicle may also be replaced independently of one another. This modular configuration is advantageous from a maintenance perspective.

The method may further comprise the step of measuring the catalyst's temperature in order, when necessary, to initiate a supply of fuel. If the temperature of the catalyst exceeds an ignition temperature of the catalyst, there is generally no need to adopt any temperature-raising measure, in which case regeneration of the particle filter takes place as intended. If the temperature of the catalyst during towing of the vehicle drops below an ignition temperature of the catalyst, a temperature-raising measure according to the invention needs to be adopted.

The catalyst's ignition temperature may be substantially 250 degrees Celsius.

The torque reduction is effected according to the invention by using an exhaust brake to achieve an increase in exhaust backpressure. Torque reduction by use of an exhaust brake of the vehicle is an effective torque-reducing measure.

In alternative embodiments of the invention, the torque reduction may be effected by using not only an exhaust brake but also an engine fan and/or any desired ancillary unit, e.g. an AC unit. This has the effect of providing an alternative way of effecting a torque-reducing measure. The result is a more versatile method for regenerating a particle filter of the vehicle during towing.

The torque reduction may thus be effected by using an engine fan and/or any desired ancillary unit while at the same time using an exhaust brake to achieve an increase in exhaust backpressure. Employing such measures to reduce both gas exchange torque and ancillary torque results in more effective compensation of an increased indicated torque of the vehicle, according to an aspect of the invention.

The method may further comprise the step of first generating the torque reduction and thereafter supplying fuel on the basis thereof so that said compensation takes place. Since for example a change in exhaust backpressure as a torque-reducing measure is a relatively slow process, it is advantageous to begin with this measure and to compensate continuously, e.g. step by step, for the torque reduction by an indicated torque achieved by supplying the engine with suitable amounts of fuel for combustion during towing.

Fuel may be supplied for a period of time which depends on the current degree of regeneration of the particle filter. Fuel may be supplied so long as towing of the vehicle continues. When its towing ceases, the vehicle may revert to normal active regeneration of the particle filter, which may for example incorporate regeneration of the particle filter without torque reduction as compensation for increased indicated torque.

An aspect of the invention proposes a device for regenerating a particle filter situated downstream of a catalyst in a motor vehicle, which device comprises means for supplying, upstream of the catalyst, fuel for combustion and to raise the temperature of the particle filter, and means for maintaining the raised temperature of the particle filter for a desired period of time. The device may comprise means for ensuring, during towing, which normally involves no supply of fuel, that the temperature of the catalyst exceeds its ignition temperature, by supplying fuel for combustion in the engine in order to raise the catalyst's temperature, and means to compensate for surplus torque due to fuel thus supplied, by generating a torque reduction.

The device may further comprise means for measuring the catalyst's temperature and means for, when necessary, initiating a supply of fuel. The means for measuring the catalyst's temperature may be a temperature sensor connected to a control unit of the vehicle. The means for, when necessary, initiating a supply of fuel during towing for active regeneration of the particle filter may be a control unit adapted to using injectors to supply fuel to at least one of the engine's cylinders.

The device may further comprise means for first generating the torque reduction and thereafter supplying fuel on the basis thereof so that said compensation takes place.

The above objects are also achieved with a motor vehicle comprising the features of the device for regenerating a particle filter of a motor vehicle during towing. The vehicle may be a truck, a bus or a passenger car.

An aspect of the invention proposes a computer programme for regenerating particle filters of a motor vehicle during towing, which computer programme comprises programme code stored on a computer-readable medium for causing an electronic control unit or another computer connected to the electronic control unit to perform the steps according to any one of claims 1-8. An aspect of the invention proposes a computer programme product comprising a programme code stored on a computer-readable medium for performing the method steps according to any one of claims 1-8, which computer programme is run on an electronic control unit or another computer connected to the electronic control unit.

Further objects, advantages and novel features of the present invention will become apparent to one skilled in the art from the following details, and also by putting the invention into practice. Whereas the invention is described below, it should be noted that it is not limited to the specific details described. Specialists having access to the teachings herein will recognise further applications, modifications and incorporations within other fields, which are within the scope of the invention.

BRIEF DESCRIPTION OF THE DRAWINGS

For fuller understanding of the present invention and further objects and advantages of it, the detailed description set out below should be read together with the accompanying drawings, in which the same reference notations denote similar items in the various diagrams, and in which:

Figure 1 illustrates schematically a vehicle according to an embodiment of the invention;
Figure 2 illustrates schematically a subsystem for the vehicle depicted in Figure 1;
Figure 3 illustrates schematically a subsystem for the vehicle depicted in Figure 1;
Figure 4a is a schematic flowchart of a method according to an embodiment of the invention;
Figure 4b is a schematic flowchart in more detail of a method according to an embodiment of the invention; and
Figure 5 illustrates schematically a computer according to an embodiment of the invention.

DETAILED DESCRIPTION OF THE DRAWINGS

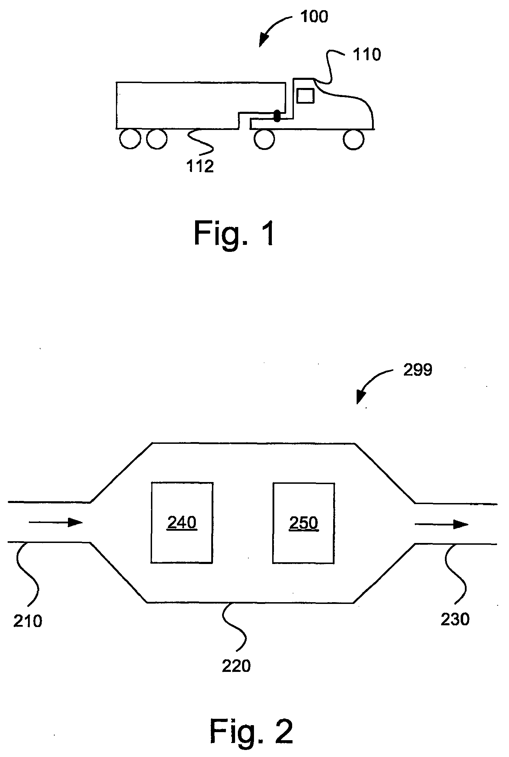

Figure 1 depicts a side view of a vehicle 100. The exemplified vehicle 100 comprises a tractor unit 110 and a trailer 112. The vehicle may be a heavy vehicle, e.g. a truck or a bus. The vehicle may alternatively be a passenger car.

The term "link" refers herein to a communication link which may be a physical connection such as an opto-electronic communication line, or a non-physical connection such as a wireless connection, e.g. a radio link or microwave link.

Figure 2 depicts a subsystem 299 of the vehicle 100. The subsystem 299 is situated in the tractor unit 110. The subsystem 299 comprises a first exhaust pipe 210 adapted to leading exhaust gases from the vehicle's engine to an exhaust housing 220. A catalyst 240 situated in the exhaust housing 220 is adapted to catalysing of chemical reactions in order to effect reduction of, for example, hydrocarbons in the exhaust gases. The catalyst 240 has an ignition temperature. Where the invention is applied in a diesel engine, the catalyst may take the form of a so-called diesel oxidation catalyst (DOC) which oxidises fuel added to the exhaust gases and thereby raises their temperature.

In the exhaust housing 220 there is also a particle filter 250, e.g. a DPF, adapted to gathering particles from the exhaust gases in order to achieve cleaner emissions from the vehicle. A second exhaust pipe 230 is adapted to leading the exhaust gases out from the vehicle to the surroundings.

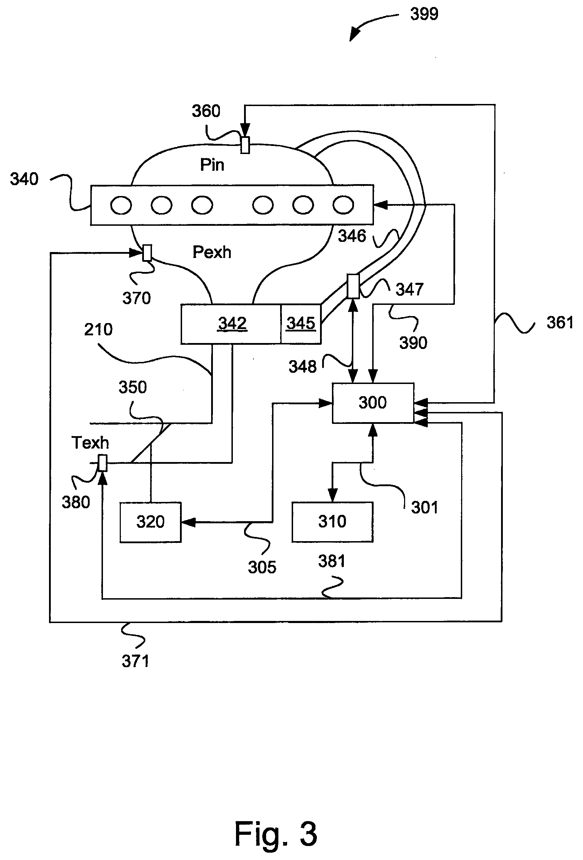

Figure 3 depicts schematically a subsystem 399 of the vehicle 100. The subsystem 399 is situated in the tractor unit 110. The subsystem 399 comprises an engine 340 which in this example is a six-cylinder diesel engine.

The engine 340 is adapted to leading exhaust gases from the combustion to an exhaust manifold 342 which has a turbocompressor 345 associated with it. The turbocompressor 345 is adapted to compressing part of the exhaust gases and leading it back to the engine 340 via a pipe 346.

The exhaust manifold 342 is adapted to leading the exhaust gases to the first exhaust pipe 210 which also appears in Figure 2 above.

An exhaust brake 350 situated in the first exhaust pipe 210 may in practice take the form of an adjustable damper which can to varying degrees constrict the exhaust flow through the exhaust pipe 210. The exhaust backpressure imparted by the exhaust brake 350 brakes the engine and thereby effects a torque reduction. In addition, the exhaust brake reduces the flow through the exhaust pipe 210. The exhaust brake may thus reduce the cooling of the catalyst 240 and the filter 250 which would otherwise be caused by large amounts of cold exhaust gases from the engine passing through the exhaust pipe, e.g. during towing when no fuel injection takes place.

A first control unit 300 is adapted to communication with the engine 340 via a link 390. The first control unit 300 is adapted to controlling the engine 340. The first control unit 300 is adapted inter alia to controlling fuel supply to the cylinders of the engine for combustion and operation of the vehicle. The first control unit 300 is adapted to controlling the generation of an indicated torque of the engine 340. The indicated torque Mind is a torque which pertains to a high-pressure portion of the engine's combustion cycle.

The first control unit 300 is adapted to continuously receiving signals about a prevailing engine speed (rpm) via the link 390. The signals may be generated by a sensor which detects the speed of a flywheel on an output shaft of the engine.

The first control unit 300 is adapted to communication with a first pressure sensor 360 via a link 361. The pressure sensor 360 is adapted to measuring a pressure Pin of air supplied to the engine before combustion. The first pressure sensor 360 is adapted to continuously sending signals containing information about the pressure Pin of air supplied to the engine before combustion and to sending these signals to the first control unit 300.

The first control unit 300 is adapted to communication with a second pressure sensor 370 via a link 371. The second pressure sensor 370 is adapted to measuring a pressure Pexh of the exhaust gases in the exhaust manifold 342. This pressure is also called exhaust backpressure. The second pressure sensor 370 is adapted to continuously sending signals containing information about the pressure of the exhaust gases and to sending these signals to the first control unit 300.

The first control unit 300 is adapted to communication with a temperature sensor 380 via a link 381. The temperature sensor 380 is adapted to measuring a temperature Texh in the first exhaust pipe 210. Alternatively, the temperature sensor 380 is adapted to measuring the temperature Texh of the catalyst 240. The temperature sensor 380 is adapted to continuously sending signals containing information about measured temperatures Texh and to sending these signals to the first control unit 300. The detected temperature Texh may be used by the first control unit to decide how far the temperature of the catalyst 240 needs to be raised to at least exceed its ignition temperature.

The first control unit 300 is adapted to communication with a first operating means 320 via a link 305. The operating means 320 is adapted to responding to control signals sent from the first control unit 300 by controlling the exhaust brake 350 situated in the first exhaust pipe 210. The first control unit 300 is adapted to reducing a gas exchange torque Mgas of the vehicle by using the operating means 320, according to an aspect of the invention.

The first control unit 300 is adapted to communication with a second operating means 347 via a link 348. The operating means 347 is a VGT (variable geometry turbocharger) valve adapted to responding to control signals sent from the first control unit 300 by varying the pressure of the exhaust gases in the pipe 346. The VGT valve is adapted to setting the pressure of the exhaust gases which are led back to the engine 340. The control unit 300 is adapted to reducing a gas exchange torque Mgas of the vehicle by using the operating means 347, according to an aspect of the invention.

A second control unit 310 is adapted to communication with the first control unit 300 via a link 301. The second control unit 310 may be detachably connected to the first control unit 300. The second control unit 310 may be a control unit external to the vehicle 100. The second control unit 310 may be adapted to performing the innovative method steps according to the invention. The second control unit 310 may be used to cross-load software to the first control unit 300, particularly software for effecting the innovative method. The second control unit 310 may alternatively be adapted to communication with the first control unit 300 via an internal network in the vehicle. The second control unit 310 may be adapted to performing substantially similar functions to the first control unit 300, e.g. compensating for a torque reduction by a corresponding increase in indicated torque.

In an illustrative example according to an embodiment of the invention, the gas exchange torque Mgas is indicated as a function of the pressure Pin of the charge air, exhaust backpressure Pexh and engine speed rpm.

It is assumed that Mfrik and Magg are constant in equation 1 above, i.e. they do not change during towing and are therefore disregarded in this example.

Given that a torque reduction is required to compensate for an increase in Mind, a suitable exhaust backpressure (torque reduction) can therefore be determined.

A model for combustion efficiency stored in the first control unit 300 can determine a relationship between Mind and a corresponding amount of fuel which should be supplied to the engine's cylinders to compensate for the change in exhaust backpressure.

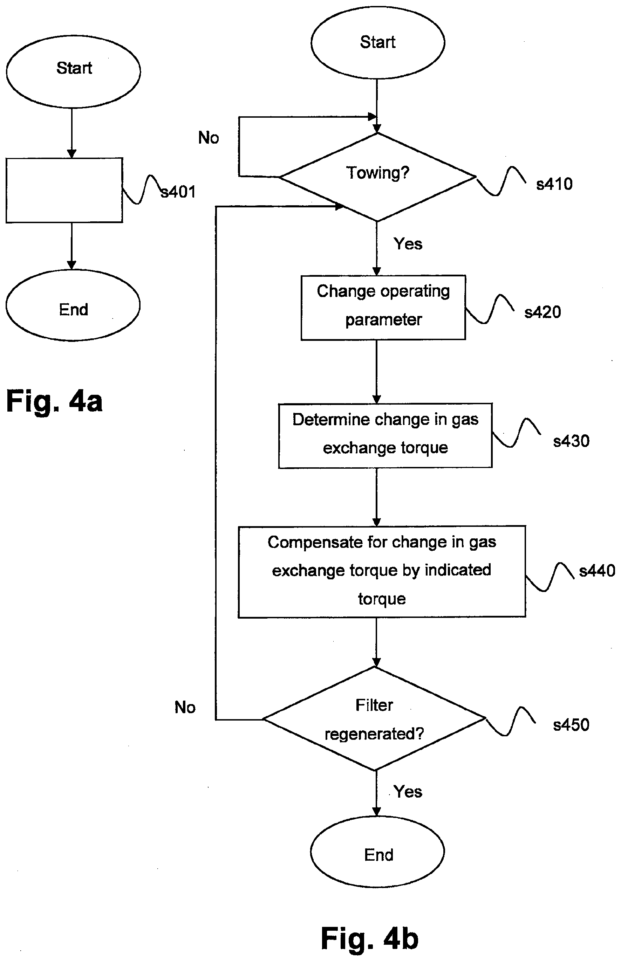

Figure 4a is a schematic flowchart of a method for regenerating a particle filter situated downstream of a catalyst in a motor vehicle, according to an embodiment of the invention. The method comprises a first step s401. Step s401 incorporates the steps of supplying fuel, upstream of the catalyst, for combustion and to raise the temperature of the particle filter, and of maintaining the raised temperature of the particle filter for a desired period of time. Step s401 incorporates the steps of ensuring, during towing, which normally involves no supply of fuel, that the temperature of the catalyst exceeds its ignition temperature, by supplying fuel for combustion in the engine in order to raise the catalyst's temperature, and of compensating for surplus torque due to fuel thus supplied, by generating a torque reduction. The method ends after step s401.

Figure 4b is a schematic flowchart of a method for regenerating a particle filter situated downstream of a catalyst in a motor vehicle, according to an embodiment of the invention.

The method comprises a first step s410. Step s410 incorporates the step of detecting states of the vehicle. If the vehicle is in a state of towing and there is a need for active regeneration of the particle filter, a subsequent step s420 is performed. If the vehicle is not in a state of towing and there is no need for active regeneration of the particle filter, step s410 is performed again.

Method step s420 incorporates the step of changing an operating parameter of the vehicle, which may according to an example take the form of increasing the vehicle's gas exchange torque Mgas. According to an example this may be effected by applying an exhaust brake downstream of the vehicle's engine so that the exhaust backpressure in the exhaust system increases by a predetermined amount. Said change in the operating parameter may be any desired change. Said change in the operating parameter is associated with a demand for change in the vehicle's gas exchange torque Mgas.

According to an example, the change in the gas exchange torque Mgas may be effected by increasing the vehicle's gas exchange torque Mgas. According to an example this may be effected by causing a control downstream of a turbo of the vehicle to reduce the vehicle's charge pressure by a predetermined amount.

According to another example, the change in the operating parameter may take the form of increasing an ancillary torque Magg of the vehicle. This may for example be done by activating and controlling the operation of an engine fan of the vehicle. It may alternatively be done by activating and controlling the operation of any desired ancillary unit of the vehicle, e.g. an AC unit, or by charging up a battery of the vehicle.

Step s420 is followed by a step s430.

Method step s430 incorporates the step of registering the actual change in a gas exchange torque Mgas of the vehicle. The change in the gas exchange torque Mgas depends on the increase in the exhaust backpressure which has taken place at step s420. The change in the gas exchange torque Mgas is determined relative to the gas exchange torque Mgas which is normal for the vehicle during towing. Alternatively, the change in the gas exchange torque Mgas may be determined relative to a level for the gas exchange torque Mgas which has been registered in a previous cycle during this method. Step s430 is followed by a step s440.

Method step s440 incorporates the step of compensating for the change in the gas exchange torque Mgas determined at step s430, by a corresponding change in indicated torque of the vehicle. This may be done by adding a determined amount of fuel in one or more of the engine's cylinders for combustion. Step s440 is followed by a step s450.

Method step s450 incorporates the step of evaluating whether the filter 250 has been regenerated or not. This may be done by determining the total period of time for which regeneration has proceeded and comparing it with a predetermined period of time representing the amount of time needed to achieve a desirable regeneration result. If it is found that the filter has been regenerated to a desirable regeneration level, the method ends. If it is found that the filter has not been regenerated to a desirable regeneration level, step s410 is performed.

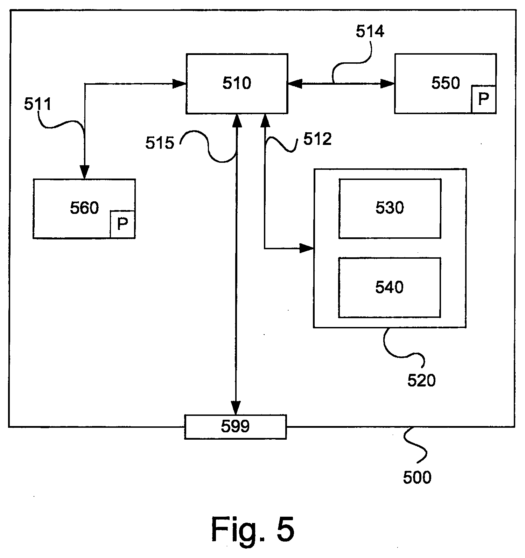

Figure 5 is a diagram of a version of a device 500. The control units 300 and 310 described with reference to Figure 2 may in a version comprise the device 500. The device 500 comprises a non-volatile memory 520, a data processing unit 510 and a read/write memory 550. The non-volatile memory 520 has a first memory element 530 in which a computer programme, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory 520 has also a second memory element 540.

A computer programme P is provided which comprises routines for determining a torque reduction which can compensate for an increase in indicated torque in order to regenerate a particle filter of a motor vehicle according to the innovative method. The programme P comprises routines for using a change in gas exchange torque Mgas and/or ancillary torque Magg as a basis for determining a corresponding indicated torque Mind of the vehicle, controlling fuel supply to the engine for combustion during towing and thereby achieving a rise in the temperature of the catalyst 240 without the driver experiencing any change in the vehicle's running characteristics, i.e. the driver does not perceive any change in the vehicle's crankshaft torque Mvev. The result is a computer programme P which comprises routines for applying the innovative method when it is run on a computer. The programme P may be stored in an executable form or in a compressed form in a memory 560 and/or in a read/write memory 550.

Where it is stated that the data processing unit 510 performs a certain function, it means that the data processing unit 510 effects a certain part of the programme which is stored in the memory 560 or a certain part of the programme which is stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit 510 via a data bus 511. The read/write memory 550 is intended to communicate with the data processing unit 510 via a data bus 514. The data port 599 may for example have the links 301, 305, 361, 371 381 and 390 connected to it (see Figure 2).

When data are received on the data port 599, they are stored temporarily in the second memory element 540. When input data received have been temporarily stored, the data processing unit 510 will be ready to effect code execution in a manner described above. According to a version, signals received on the data port 599 contain information about exhaust temperature Texh, prevailing engine speed rpm, charge pressure Pin, exhaust pressure Pexh. The signals received on the data port 599 may be used by the device 500 to, for example, determine gas exchange torque Mgas and control fuel supply to the engine for combustion during towing in order to compensate for an automatic torque reduction.

Parts of the methods herein described may be effected by the device 500 by means of the data processing unit 510 which runs the programme stored in the memory 560 or the read/write memory 550. When the device 500 runs the programme, methods herein described are executed.

The foregoing description of the preferred embodiments of the present invention is provided for illustrative and descriptive purposes. It is not intended to be exhaustive or to limit the invention to the variants described. Many modifications and variants will obviously be apparent to one skilled in the art. The embodiments have been chosen and described in order best to make clear the principles of the invention and its practical applications and hence to make it possible for specialists to understand the invention for various embodiments and with the various modifications appropriate to the intended use.

## Claims

1.    A method for regenerating a particle filter (250) situated downstream of a catalyst (240) in a motor vehicle (100; 110), comprising the steps of:

- supplying fuel, upstream of the catalyst (240), for combustion and to raise the temperature of the particle filter (250);
- maintaining the raised temperature of the particle filter (250) for a desired period of time,
**characterised**
- **by** ensuring, during towing, which normally involves no supply of fuel, that the temperature of the catalyst (240) exceeds its ignition temperature, by supplying fuel for combustion in the engine (340) in order to raise the catalyst's temperature; and
- by compensating for surplus torque which is due to fuel thus supplied, by generating a torque reduction by using an exhaust brake (350) to raise exhaust backpressure.

2.  A method according to claim 1, further comprising the step of:

    - measuring the catalyst's temperature in order, when necessary, to initiate a supply of fuel.

3.  A method according to claim 1 or 2, using a catalyst whose ignition temperature is substantially 250 degrees Celsius.

4.  A method according to any one of the foregoing claims, in which the torque reduction is effected by use of any desired ancillary unit, e.g. an AC unit, in addition to using an exhaust brake to raise exhaust backpressure.

5.  A method according to any one of the foregoing claims, in which the torque reduction is effected by use of an engine fan in addition to using an exhaust brake to raise exhaust backpressure.

6.  A method according to any one of the foregoing claims, further comprising the step of:

    - first generating torque reduction and thereafter supplying fuel on the basis thereof so that said compensation is effected.

7.  A method according to any one of the foregoing claims, in which fuel is supplied for a period of time which depends on the particle filter's current degree of regeneration.

8.  A device for regenerating a particle filter (250) situated downstream of a catalyst (240) in a motor vehicle (100; 110), comprising:

    - means for supplying fuel, upstream of the catalyst, for combustion and to raise the temperature of the particle filter (250);
    - means (300; 310; 500) for maintaining the raised temperature of the particle filter for a desired period of time, **characterised**
    - **by** means (300; 310; 500) for ensuring, during towing, which normally involves no supply of fuel, that the temperature of the catalyst (240) exceeds its ignition temperature, by supplying fuel for combustion in the engine (340) in order to raise the catalyst's temperature; and
    - by an exhaust brake (350) for raising exhaust backpressure and for generating a torque reduction to compensate for surplus torque which is due to fuel thus supplied.

9.  A device according to claim 8, further comprising:

    - means (380) for measuring the catalyst's temperature and means (300; 310; 500) for, when necessary, for initiating a supply of fuel.

10. A device according to either of claims 8 and 9, in which the catalyst's ignition temperature is substantially 250 degrees Celsius.

11. A device according to any one of claims 8-10, further comprising any desired ancillary unit, e.g. an AC unit, used for the torque reduction in addition to the exhaust brake.

12. A device according to any one of claims 8-11, further comprising an engine fan used for torque reduction in addition to the exhaust brake.

13. A device according to any one of claims 8-12, further comprising:

    - means (300; 310; 500) for first generating torque reduction and thereafter supplying fuel on the basis thereof so that said compensation is effected.

14. A device according to any one of claims 8-13, further comprising means for supply of fuel for a period of time which depends on the current degree of regeneration of the particle filter (250).

**15.** A motor vehicle (100; 110) comprising a device according to any one of claims 8-14.

**16.** A motor vehicle (100; 110) according to claim 15, which vehicle is any from among truck, bus or passenger car.

**17.** A computer programme (P) for regenerating a particle filter situated downstream of a catalyst in a motor vehicle, which computer programme (P) comprises programme code stored on a computer-readable medium for causing an electronic control unit (200; 500) or another computer (210; 500) connected to the electronic control unit (200; 500) to perform the steps according to any one of claims 1-7.

**18.** A computer programme product comprising a programme code stored on a computer-readable medium for performing the method steps according to any one of claims 1-7, which computer programme is run on an electronic control unit (200; 500) or another computer (210; 500) connected to the electronic control unit (200; 500).

**Patentansprüche**

**1.** Verfahren zum Regenerieren eines Partikelfilters (250), der stromabwärts eines Katalysators (240) in einem Kraftfahrzeug (100; 110) angeordnet ist, umfassend die Schritte:

- Zuführen von Kraftstoff stromaufwärts des Katalysators (240) für eine Verbrennung und zum Anheben der Temperatur des Partikelfilters (250);
- Aufrechterhalten der angehobenen Temperatur des Partikelfilters (52) über eine gewünschte Zeitperiode, **gekennzeichnet**
- **durch** Sicherstellen während eines Schleppbetriebs, der üblicherweise keine Kraftstoffzufuhr umfasst, dass die Temperatur des Katalysators (240) seine Zündtemperatur übersteigt, indem Kraftstoff für eine Verbrennung in dem Motor (340) zugeführt wird, um die Katalysatortemperatur zu erhöhen; und
- **durch** Kompensieren überschüssigen Drehmoments, das sich aus dem somit zugeführten Kraftstoff ergibt, durch Erzeugen einer Drehmomentreduzierung unter Einsatz einer Abgasbremse (53), um den Abgasrückdruck zu erhöhen.

**2.** Verfahren nach Anspruch 1, ferner umfassend den Schritt:

- Messen der Temperatur des Katalysators, um dann, wenn erforderlich, eine Zufuhr von Kraftstoff einzuleiten.

**3.** Verfahren nach Anspruch 1 oder 2, wobei ein Katalysator verwendet wird, dessen Zündtemperatur im Wesentlichen 250 °C beträgt.

**4.** Verfahren nach einem der vorangehenden Ansprüche, wobei die Drehmomentreduzierung bewirkt wird durch die Verwendung irgendeiner Zusatzeinheit, beispielsweise einer Klimatisierungseinheit, zusätzlich zu einer Verwendung einer Abgasbremse, um den Abgasrückdruck zu erhöhen.

**5.** Verfahren nach einem der vorangehenden Ansprüche, wobei die Drehmomentreduzierung bewirkt wird durch die Verwendung eines Motorlüfters, zusätzlich zu einer Verwendung einer Abgasbremse, um den Abgasrückdruck zu erhöhen.

**6.** Verfahren nach einem der vorangehenden Ansprüche ferner umfassend den Schritt:

- erst Drehmomentreduzierung erzeugen und dann Kraftstoff zuführen, so dass demnach der Ausgleich erfolgt.

**7.** Verfahren nach einem der vorangehenden Ansprüche, bei dem Kraftstoff über eine Zeitperiode zugeführt wird, die vom momentanen Grad der Regeneration des Partikelfilters abhängt.

**8.** Vorrichtung, zum Regenerieren eines Partikelfilters (250), der stromabwärts eines Katalysators (240) in einem Kraftfahrzeug (100; 110) angeordnet ist, umfassend

- Mittel zum Zuführen von Kraftstoff stromaufwärts des Katalysators (240) für eine Verbrennung und zum Anheben der Temperatur des Partikelfilters (250);
- Mittel (300; 310; 500) zum Aufrechterhalten der angehobenen Temperatur des Partikelfilters (52) über eine gewünschte Zeitperiode,
**gekennzeichnet**

- **durch** Mittel (300; 310; 500) zum Sicherstellen während eines Schleppbetriebs, der üblicherweise keine Kraftstoffzufuhr umfasst, dass die Temperatur des Katalysators (240) seine Zündtemperatur übersteigt, indem Kraftstoff für eine Verbrennung in dem Motor (340) zugeführt wird, um die Katalysatortemperatur zu erhöhen; und
- **durch** eine Abgasbremse (350), um den Abgasrückdruck zu erhöhen und zum Erzeugen einer Drehmomentreduzierung, um das überschüssige Drehmoment zu kompensieren, das sich aus dem derart zugeführten Kraftstoff ergibt.

9.  Vorrichtung nach Anspruch 8, ferner umfassend:

    - Mittel (380) zum Messen der Katalysatortemperatur und Mittel (300; 310; 500) um dann, wenn erforderlich, eine Zufuhr von Kraftstoff einzuleiten.

10. Vorrichtung nach Anspruch 8 oder 9, wobei ein Katalysator verwendet wird, dessen Zündtemperatur im Wesentlichen 250 °C beträgt.

11. Vorrichtung nach einem der Ansprüche 8-10, ferner umfassend irgendeine Zusatzeinheit, beispielsweise eine Klimatisierungseinheit, die zusätzlich zur Abgasbremse zur Drehmomentreduzierung benutzt wird.

12. Vorrichtung nach einem der Ansprüche 8-11, ferner umfassend einen Motorlüfter, der zusätzlich zur Abgasbremse zur Drehmomentreduzierung benutzt wird.

13. Vorrichtung nach einem der Ansprüche 8-12, ferner umfassend:

    - Mittel (300; 310; 500), um erst eine Drehmomentreduzierung zu erzeugen und dann Kraftstoff zuzuführen, so dass demnach besagter Ausgleich erfolgt.

14. Vorrichtung nach einem der Ansprüche 8-13, ferner umfassend Mittel zum Zuführen von Kraftstoff über eine Zeitdauer, die vom momentanen Grad der Regeneration des Partikelfilters (250) abhängt.

15. Kraftfahrzeug (100; 110) umfassend eine Vorrichtung nach einem der Ansprüche 8-14.

16. Kraftfahrzeug (100; 110) nach Anspruch 15, wobei das Fahrzeug ein LKW, Bus oder PKW ist.

17. Computerprogramm (P) zum Regenerieren eines Partikelfilters, der stromabwärts eines Katalysators in einem Kraftfahrzeug angeordnet ist, wobei das Computerprogramm (P) Programmcode umfasst, der auf einem computerlesbaren Speichermedium gespeichert ist, um zu bewirken, dass eine elektrische Steuereinheit (200; 500) oder ein anderer Computer (210; 500), der mit der elektrischen Steuereinheit (200; 500) verbunden ist, die Schritte entsprechend der Ansprüche 1-7 durchführt.

18. Computerprogrammprodukt, umfassend einen Programmcode, der auf einem computerlesbaren Speichermedium gespeichert ist, um die Verfahrensschritte nach einem der Ansprüche 1-7 durchzuführen, wobei das Computerprogramm auf einer elektrischen Steuereinheit (200; 500) oder einem anderen Computer (210; 500) ausgeführt wird, die an die elektrische Steuereinheit (200; 500) angeschlossen sind.


**Revendications**

1.  Procédé de régénération d'un filtre à particules (250) situé en aval d'un catalyseur (240) dans un véhicule à moteur (100 ; 110), comprenant les étapes consistant à :

    - amener du carburant, en amont du catalyseur (240), pour une combustion et pour élever la température du filtre à particules (250) ;
    - maintenir la température élevée du filtre à particules (250) pendant une période de temps souhaitée,

    **caractérisé par** le fait de

- garantir, lors d'un remorquage, qui n'implique normalement aucune amenée de carburant, que la température du catalyseur (240) excède sa température d'allumage, en amenant du carburant pour une combustion dans le moteur (340) afin d'élever la température du catalyseur ; et
- compenser un couple excédentaire qui est dû au carburant ainsi amené, en générant une réduction de couple à l'aide d'un frein sur échappement (350) pour élever une contre-pression à l'échappement.

2. Procédé selon la revendication 1, comprenant en outre l'étape consistant à :

- mesurer la température du catalyseur afin, lorsque nécessaire, d'initier une amenée de carburant.

3. Procédé selon la revendication 1 ou 2, utilisant un catalyseur dont la température d'allumage est sensiblement de 250 degrés Celsius.

4. Procédé selon l'une quelconque des revendications précédentes, dans lequel la réduction de couple est effectuée à l'aide d'une quelconque unité auxiliaire souhaitée, par exemple une unité de conditionnement d'air (AC), en plus de l'utilisation d'un frein sur échappement pour élever la contre-pression à l'échappement.

5. Procédé selon l'une quelconque des revendications précédentes, dans lequel la réduction de couple est effectuée à l'aide d'un ventilateur du moteur en plus de l'utilisation d'un frein sur échappement pour élever la contre-pression à l'échappement.

6. Procédé selon l'une quelconque des revendications précédentes, comprenant en outre l'étape consistant à :

- générer tout d'abord une réduction de couple, et ensuite amener le carburant en fonction de celle-ci, de façon à effectuer ladite compensation.

7. Procédé selon l'une quelconque des revendications précédentes, dans lequel le carburant est amené pendant une période de temps qui dépend du degré de régénération en cours du filtre à particules.

8. Dispositif de régénération d'un filtre à particules (250) situé en aval d'un catalyseur (240) dans un véhicule à moteur (100 ; 110), comprenant :

- des moyens pour amener du carburant, en amont du catalyseur, pour une combustion et pour élever la température du filtre à particules (250) ;
- des moyens (300 ; 310 ; 500) pour maintenir la température élevée du filtre à particules pendant une période de temps souhaitée,

**caractérisé par** :

- des moyens (300 ; 310 ; 500) pour garantir, lors d'un remorquage, qui n'implique normalement aucune amenée de carburant, que la température du catalyseur (240) excède sa température d'allumage, en amenant du carburant pour une combustion dans le moteur (340) afin d'élever la température du catalyseur ; et
- un frein sur échappement (350) pour élever une contre-pression à l'échappement et pour générer une réduction de couple afin de compenser un couple excédentaire qui est dû au carburant ainsi amené.

9. Dispositif selon la revendication 8, comprenant en outre :

- des moyens (380) pour mesurer la température du catalyseur et des moyens (300 ; 310 ; 500) pour, lorsque nécessaire, initier une amenée de carburant.

10. Dispositif selon l'une ou l'autre des revendications 8 et 9, dans lequel la température d'allumage du catalyseur est sensiblement de 250 degrés Celsius.

11. Dispositif selon l'une quelconque des revendications 8 à 10, comprenant en outre une quelconque unité auxiliaire souhaitée, par exemple une unité de conditionnement d'air (AC), utilisée pour la réduction de couple en plus du frein sur échappement.

12. Dispositif selon l'une quelconque des revendications 8 à 11, comprenant en outre un ventilateur du moteur utilisé pour une réduction de couple en plus du frein sur échappement.

13. Dispositif selon l'une quelconque des revendications 8 à 12, comprenant en outre :

   - des moyens (300 ; 310 ; 500) pour générer tout d'abord une réduction de couple et ensuite amener le carburant en fonction de celle-ci de façon à effectuer ladite compensation.

14. Dispositif selon l'une quelconque des revendications 8 à 13, comprenant en outre des moyens pour amener du carburant pendant une période de temps qui dépend du degré de régénération en cours du filtre à particules (250).

15. Véhicule à moteur (100 ; 110) comprenant un dispositif selon l'une quelconque des revendications 8 à 14.

16. Véhicule à moteur (100 ; 110) selon la revendication 15, lequel véhicule est l'un quelconque parmi un camion, un bus ou un car de transport de passagers.

17. Programme informatique (P) pour la régénération d'un filtre à particules situé en aval d'un catalyseur dans un véhicule à moteur, lequel programme informatique (P) comprend un code de programme stocké sur un support lisible par un ordinateur pour faire en sorte qu'une unité de commande électronique (200 ; 500) ou un autre ordinateur (210 ; 500) connecté à l'unité de commande électronique (200 ; 500) exécute les étapes selon l'une quelconque des revendications 1 à 7.

18. Produit de programme informatique comprenant un code de programme stocké sur un support lisible par un ordinateur pour l'exécution des étapes de procédé selon l'une quelconque des revendications 1 à 7, lequel programme informatique est exécuté sur une unité de commande électronique (200 ; 500) ou un autre ordinateur (210 ; 500) connecté à l'unité de commande électronique (200 ; 500).

100
110
112

## Fig. 1

299
210
240
250
220
230

## Fig. 2

Fig. 3

Start

s401

End

## Fig. 4a

Start

No → Towing? s410

Yes

Change operating parameter s420

Determine change in gas exchange torque s430

Compensate for change in gas exchange torque by indicated torque s440

No → Filter regenerated? s450

Yes

End

## Fig. 4b

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1961939 A